# EUROPÄISCHE PATENTANMELDUNG

(11) **EP 4 625 927 A1**
(43) Veröffentlichungstag der Anmeldung: **01.10.2025**
(21) Anmeldenummer: 24166412.7
(22) Anmeldetag: 26.03.2024
(51) Int. Cl.: H04L 41/12, H04L 41/22, H04L 41/14

(54) **VERFAHREN UND VORRICHTUNG ZUR RECHNERGESTÜTZTEN BENUTZERASSISTENZ BEI DER ERSTELLUNG EINER TOPOLOGIE EINES KOMMUNIKATIONSNETZWERKS FÜR EINE INDUSTRIELLE ANLAGE**

(71) Anmelder: Siemens Aktiengesellschaft, 80333 München (DE)
(72) Erfinder: Gsänger, Volker, 91126 Kammerstein (DE); Keidel, Torsten, 91056 Erlangen (DE); Rehm, Andreas, 90475 Nürnberg (DE); Schwering, Wolfgang, 91341 Röttenbach (DE)
(74) Vertreter: Siemens Patent Attorneys

(57) **Zusammenfassung**

Die Erfindung betrifft ein Verfahren zur rechnergestützten Benutzerassistenz bei der Erstellung einer Topologie eines Kommunikationsnetzwerks (KN) für eine industrielle Anlage, wobei mittels einer Benutzerschnittstelle (UI) umfassend ein Display (DI):
a) vordefinierte Netzwerkabschnitte (NA1, NA2, NA3) in Antwort auf erste Benutzereingaben an der Benutzerschnittstelle (UI) auf dem Display (DI) graphisch wiedergegeben werden, wobei die ersten Benutzereingaben für jeden wiederzugebenden Netzwerkabschnitt (NA1, NA2, NA3) einen Netzwerktyp (NT1, NT2, NT3) aus einer Mehrzahl von Netzwerktypen (NT1, NT2, NT3) und eine Netzwerkfunktion (NF1, NF2, NF3) aus einer Mehrzahl von Netzwerkfunktionen (NF1, NF2, NF3) auswählen, wobei ein jeweiliger wiedergegebener Netzwerkabschnitt (NA1, NA2, NA3) dem ausgewählten Netzwerktyp (NT1, NT2, NT3) entspricht und die ausgewählte Netzwerkfunktion (NF1, NF2, NF3) aufweist und Geräte (1, 2, ..., 5) aus vorbestimmten Gerätetypen und interne Kommunikationsverbindungen (6, 7, 8, 9) zwischen den Geräten (1, 2, ..., 5) enthält, wobei die Geräte (1, 2, ..., 5) und die internen Kommunikationsverbindungen (6, 7, 8, 9) auf dem Display (DI) graphisch wiedergegeben werden;
b) externe Kommunikationsverbindungen (601, 701) zwischen zumindest einigen der wiedergegebenen Netzwerkabschnitte (NA1, NA2, NA3) in Antwort auf zweite Benutzereingaben an der Benutzerschnittstelle (UI) auf dem Display (DI) graphisch wiedergegeben werden, wobei die zweiten Benutzereingaben Verknüpfungen zwischen wiedergegebenen Geräten (1, 2, ..., 5) unterschiedlicher Netzwerkabschnitte (NA1, NA2, NA3) festlegen.

## Beschreibung

Die Erfindung betrifft ein Verfahren und eine Vorrichtung zur rechnergestützten Benutzerassistenz bei der Erstellung einer Topologie eines Kommunikationsnetzwerks für eine industrielle Anlage.

Im Rahmen des Designs bzw. Entwurfs einer industriellen Anlage ist es unerlässlich, die einzelnen Geräte der industriellen Anlage sowie die Kommunikation zwischen diesen Geräten zu spezifizieren. Insbesondere ist es hierbei wichtig, die in der Anlage verwendeten Protokolle, wie z.B. Redundanzprotokolle und Zeitsynchronisierungsprotokolle, festzulegen, um einen zuverlässigen und synchronen Anlagenbetrieb sicherzustellen.

Bis dato gibt es keine standardisierten Regeln bzw. Vorgehensweisen für das Design bzw. die Konfiguration eines industriellen Kommunikationsnetzwerks. Dies führt häufig dazu, dass von entsprechenden Experten entworfene Netzwerktopologien häufig sehr unübersichtlich und unnötig kompliziert werden, was die Wartbarkeit entsprechend implementierter Kommunikationsnetzwerke erschwert. Im schlimmsten Fall wird das Kommunikationsnetzwerk so geplant, dass es den benötigten Erfordernissen nicht und nur unvollständig genügt.

Heutzutage werden Kommunikationsnetzwerke für industrielle Anlagen über Software-Tools entworfen, die eine bildhafte Darstellung des Kommunikationsnetzwerks ermöglichen. Dabei müssen Komponenten bzw. Geräte des Kommunikationsnetzwerks durch den Benutzer einzeln mit Hilfe des Software-Tools hinzugefügt werden. In der Regel können dabei netzwerkübergreifende Parameter und Funktionen nicht als Kenngrößen hinterlegt werden. Ferner können entsprechende Parameter der einzelnen Geräte, wie z.B. IP-Adressen, Verbindungen zwischen physikalischen Switch-Ports, Segmentierung einzelner Netzwerkbereiche über VLANs und dergleichen, lediglich textuell über das Software-Tool eingegeben werden. Aus Übersichtlichkeitsgründen ist es meist nicht möglich, sämtliche notwendigen Details des Kommunikationsnetzwerks über das Software-Tool in der bildhaften Darstellung des Kommunikationsnetzwerks zu hinterlegen. Diese Informationen müssen meist in separaten Dokumenten bzw. Listen abgespeichert werden.

Aufgabe der Erfindung ist es, die Assistenz eines Benutzers bei der Erstellung einer Topologie eines Kommunikationsnetzwerks für eine industrielle Anlage mittels eines rechnergestützten Verfahrens zu verbessern.

Diese Aufgabe wird durch das Verfahren gemäß Patentanspruch 1 gelöst. Weiterbildungen der Erfindungen sind in den abhängigen Ansprüchen definiert.

Das erfindungsgemäße Verfahren dient zur rechnergestützten Benutzerassistenz bei der Erstellung einer Topologie eines Kommunikationsnetzwerks für eine industrielle Anlage. Vorzugsweise basiert dieses Kommunikationsnetzwerk auf Industrial Ethernet. Bei der industriellen Anlage kann es sich um eine beliebige technische Anlage handeln, welche gegebenenfalls auch mehrere separate Teilanlagen umfassen kann. Beispielsweise kann die Anlage ein Umspannwerk oder eine Automobilproduktion sein.

Im Rahmen des erfindungsgemäßen Verfahrens werden die weiter unten erläuterten Schritte a) und b) durchgeführt. Diese beiden Schritte umfassen jeweils eine Vielzahl von Teilschritten, welche in Antwort auf entsprechende erste bzw. zweite Benutzereingaben durchgeführt werden. Dabei wird durch die Schritte a) und b) keine chronologische Reihenfolge der Ausführung der Teilschritte festgelegt. Insbesondere können Teilschritte von Schritt a) und b) ineinander verschachtelt sein. Es ist nicht erforderlich, dass zunächst alle Teilschritte des Schritts a) und erst dann alle Teilschritte des Schritts b) durchgeführt werden. Die Schritte a) und b) werden durch eine Benutzerschnittstelle umfassend ein Display ausgeführt. Zu der Benutzerschnittstelle gehört dabei ein entsprechender Rechner, der die Ausführung der Schritte bewirkt.

Gemäß Schritt a) werden vordefinierte Netzwerkabschnitte in Antwort auf erste Benutzereingaben an der Benutzerschnittstelle auf dem Display graphisch wiedergegeben, wobei die ersten Benutzereingaben für jeden wiederzugebenden Netzwerkabschnitt einen Netzwerktyp aus einer Mehrzahl von Netzwerktypen und eine Netzwerkfunktion aus einer Mehrzahl von Netzwerkfunktionen auswählen. Hier und im Folgenden ist unter einem Netzwerktyp eine Netzwerkkategorie zu verstehen. Diese ersten Benutzereingaben und auch die weiter unten beschriebenen zweiten Benutzereingaben können beliebig ausgestaltet sein. Beispielsweise können sie über ein entsprechendes Bediengerät der Benutzerschnittstelle, wie z.B. eine Computermaus, eingegeben werden. Ein jeweiliger Netzwerkabschnitt, der in Antwort auf eine entsprechende erste Benutzereingabe graphisch wiedergegeben wird, entspricht dem ausgewählten Netzwerktyp und weist die ausgewählte Netzwerkfunktion auf. Ferner enthält ein jeweiliger wiedergegebener Netzwerkabschnitt Geräte aus vorbestimmten Gerätetypen und interne Kommunikationsverbindungen zwischen den Geräten, wobei die Geräte und die internen Kommunikationsverbindungen auf dem Display graphisch wiedergegeben werden. Hier und im Folgenden ist unter einem Gerätetyp eine Gerätekategorie zu verstehen.

In Schritt b) werden externe Kommunikationsverbindungen zwischen zumindest einigen der angezeigten Netzwerkabschnitte in Antwort auf zweite Benutzereingaben an der Benutzerschnittstelle auf dem Display graphisch wiedergegeben, wobei die zweiten Benutzereingaben Verknüpfungen zwischen wiedergegebenen Geräten unterschiedlicher Netzwerkabschnitte (d.h. zwischen Kommunikationspunkten dieser Geräte) festlegen.

Das erfindungsgemäße Verfahren ermöglicht die graphische Wiedergabe von vordefinierten Netzwerkabschnitten in der Form entsprechender Templates basierend auf einer Benutzerauswahl an der Benutzerschnittstelle. Dabei kann der Benutzer die externen Kommunikationsverbindungen zwischen diesen Netzwerkabschnitten festlegen. Auf diese Weise wird das Design einer Netzwerktopologie durch Rückgriff auf vorgegebene Templates stark vereinfacht.

In einer bevorzugten Variante wird die anhand der obigen Schritte a) und b) erstellte und graphisch wiedergegebene Netzwerktopologie auf einem digitalen Speicher gespeichert, d.h. es werden digitale Daten erzeugt, die der Netzwerktopologie entsprechen. Diese digitalen Daten können zu einem späteren Zeitpunkt wieder aufgerufen werden, um die Netzwerktopologie zur weiteren Bearbeitung wieder auf dem Display anzuzeigen.

In einer bevorzugten Ausführungsform umfasst die Mehrzahl von Netzwerktypen, aus denen ein Benutzer auswählen kann, einen oder mehrere und vorzugsweise alle der folgenden Typen:
- ein zentrales Netzwerk, das häufig auch als Backbone bezeichnet wird;
- ein dezentrales Netzwerk, das zur (direkten oder indirekten) Anbindung an ein zentrales Netzwerk vorgesehen ist und häufig auch als Bay-Netz oder Zellen-Netz bezeichnet wird;
- ein Aggregationsnetzwerk, das zur Zwischenschaltung zwischen einem zentralen Netzwerk und mehreren dezentralen Netzwerken vorgesehen ist.

Die Mehrzahl von Netzwerkfunktionen, die ein Benutzer auswählen kann, können beliebige Funktionen darstellen. In einer besonders bevorzugten Variante umfassen die Netzwerkfunktionen Netzwerkprotokolle, wobei ein Netzwerkprotokoll, das ein jeweiliger wiedergegebener Netzwerkabschnitt als Netzwerkfunktion aufweist, in diesem Netzwerkabschnitt verwendet wird. Vorzugsweise enthalten die Netzwerkprotokolle ein oder mehrere Redundanzprotokolle und/oder ein oder mehrere Zeitsynchronisierungsprotokolle.

In einer besonders bevorzugten Ausführungsform umfassen die Netzwerkprotokolle zumindest eines der folgenden Protokolle:
- PRP (= Parallel Redundancy Protocol), das im Standard IEC 62439-3 definiert ist;
- HSR (= High-Availability Seamless Redundancy), das im Standard IEC 62439-3 definiert ist;
- RSTP (= Rapid Spanning Tree Protocol), das im Standard IEEE 802.1w definiert ist;
- NTP (= Network Time Protocol), das in verschiedenen RFCs (RFC = Request For Comments), wie z.B. RFC5905, definiert ist;
- PTP (= Precision Time Protocol), das im Standard IEC 61588 definiert ist.
- MRP (= Media Redundancy Protocol).

Alle oben genannten Protokolle sind dem Fachmann hinlänglich bekannt. Bei PRP, HSR und RSTP handelt es sich um Redundanzprotokolle, wohingegen NTP und PTP Zeitsynchronisierungsprotokolle sind. Die obigen Protokolle sind lediglich beispielhaft und es können gegebenenfalls weitere oder andere Netzwerkprotokolle zur Auswahl durch den Benutzer vorgesehen sein.

In einer weiteren bevorzugten Variante umfassen die vorbestimmten Gerätetypen, die in den angezeigten Netzwerkabschnitten enthalten sind, einen oder mehrere Netzwerkgerätetypen (d.h. Netzwerkgerätekategorien) und vorzugsweise einen oder mehrere Typen/Kategorien von Switches und/oder Routern.

In einer weiteren bevorzugten Ausführungsform umfassen die vorbestimmten Gerätetypen, die in wiedergegebenen Netzwerkabschnitten enthalten sind, einen oder mehrere Endgerätetypen (d.h. Endgerätekategorien) und vorzugsweise einen oder mehrere der folgenden Typen/Kategorien:
- Protection IED (= Intelligent Electronic Device), wobei dieser Typ im Standard IEC 61850 definiert ist;
- MU (= Merging Unit), wobei dieser Typ auch im Standard IEC 61850 definiert ist.

In einer weiteren, besonders bevorzugten Ausführungsform ermöglicht die Benutzerschnittstelle eine Modifikation der wiedergegebenen Netzwerkabschnitte durch den Benutzer. Vorzugsweise kann der Benutzer dabei Geräte und/oder interne Kommunikationsverbindungen in den wiedergegebenen Netzwerkabschnitten über die Benutzerschnittstelle löschen und/oder hinzufügen und/oder verändern.

In einer weiteren bevorzugten Ausgestaltung werden externe Kommunikationsverbindungen nur dann dauerhaft auf dem Display in Antwort auf eine zweite Benutzereingabe graphisch wiedergegeben, wenn die Verknüpfung zwischen den wiedergegebenen Geräten entsprechend der zweiten Benutzereingabe zulässig ist. Somit sind in der Benutzerschnittstelle geeignete Zulässigkeitskriterien festgelegt. Dabei kann eine externe Kommunikationsverbindung überhaupt nicht zur Anzeige gebracht, wenn das Zulässigkeitskriterium nicht erfüllt ist. Ebenso ist es möglich, dass eine entsprechende Kommunikationsverbindung zunächst angezeigt wird, jedoch anschließend wieder gelöscht wird, wenn das Zulässigkeitskriterium nicht erfüllt ist.

Neben dem oben beschriebenen Verfahren betrifft die Erfindung eine Vorrichtung zur rechnergestützten Benutzerassistenz bei der Erstellung einer Topologie eines Kommunikationsnetzwerks für eine industrielle Anlage, wobei die Vorrichtung eine Benutzerschnittstelle mit einem Display umfasst und die Benutzerschnittstelle zur Durchführung des erfindungsgemäßen Verfahrens bzw. einer oder mehrerer bevorzugter Varianten des erfindungsgemäßen Verfahrens konfiguriert ist.

Ausführungsbeispiele der Erfindung werden nachfolgend anhand der beigefügten Figuren detailliert beschrieben.

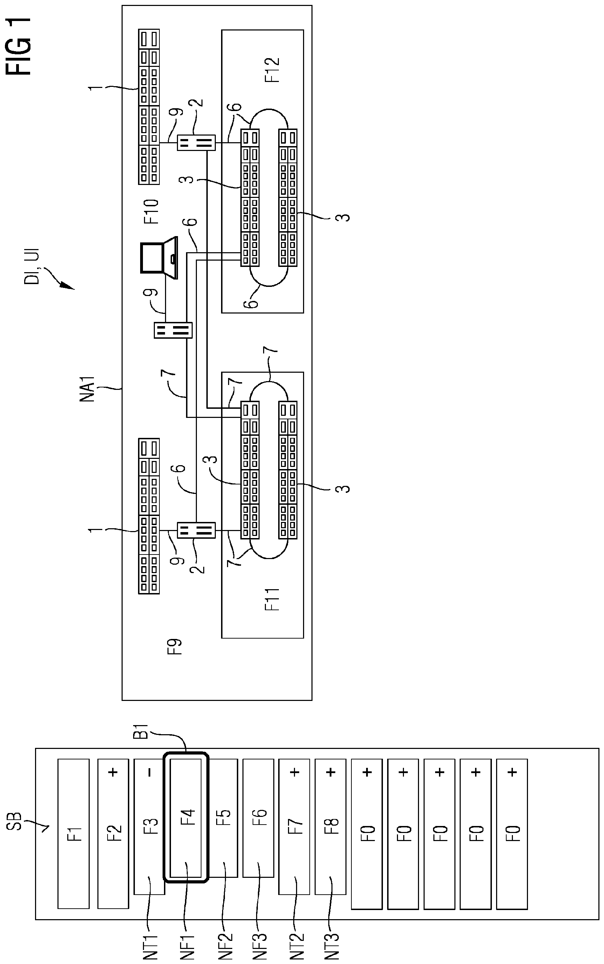

Fig. 1 bis Fig. 5 zeigen visuelle Anzeigen auf dem Display einer Benutzerschnittstelle, um die Schritte einer Ausführungsform des erfindungsgemäßen Verfahrens zu verdeutlichen.

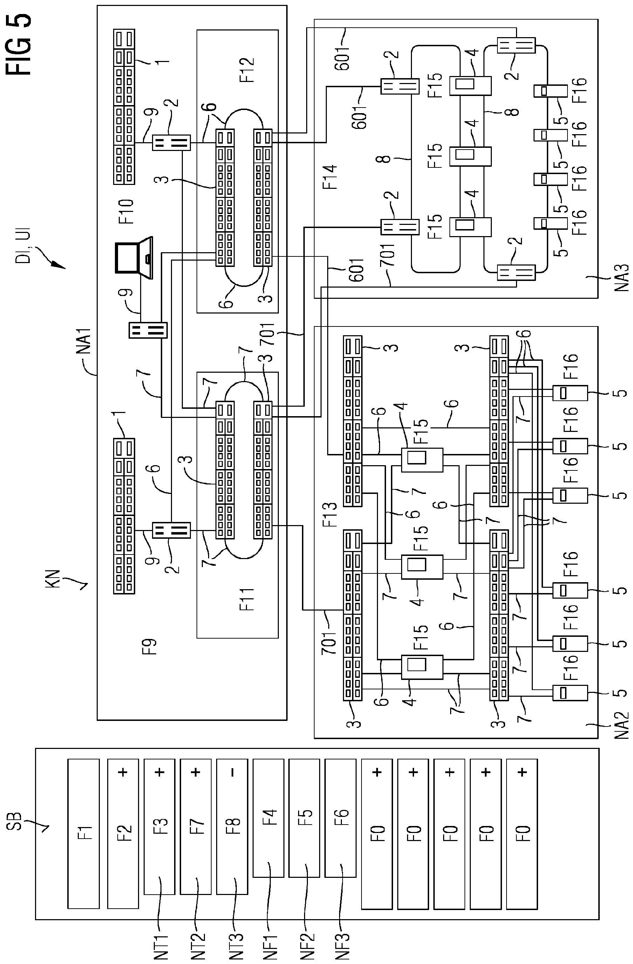

Nachfolgend wird eine Ausführungsform der Erfindung anhand der Erstellung der Topologie eines Kommunikationsnetzwerks für eine industrielle Anlage in der Form eines digitalen Umspannwerks (englisch: digital substation) beschrieben. Das entsprechende Kommunikationsnetzwerk des Umspannwerks beruht auf der bereits oben erwähnten Norm IEC 61850 und verwendet Industrial Ethernet. Die nachfolgenden Figuren 1 bis 5 zeigen dabei visuelle Anzeigen auf einem entsprechenden Display DI einer Benutzerschnittstelle Ul, wobei ein Benutzer durch Bedienung der Benutzerschnittstelle UI eine entsprechende Topologie des Kommunikationsnetzwerks erstellt. Das Kommunikationsnetzwerk mit der entsprechenden Topologie ist das Endergebnis des Verfahrens. Dieses Kommunikationsnetzwerk ist in Fig. 5 mit Bezugszeichen KN bezeichnet.

In allen nachfolgend beschriebenen Figuren kann der Benutzer entsprechende Benutzereingaben durchführen, indem er mit Elementen auf der visuellen Anzeige des Displays DI unter Verwendung eines Eingabegeräts der Benutzerschnittstelle UI interagiert. Beispielsweise kann das Eingabegerät eine Computermaus sein, über welche der Benutzer einen Cursor auf dem Display DI bewegen kann und Elemente auswählen bzw. hinzufügen bzw. löschen bzw. verschieben kann. Die Benutzerschnittstelle UI ist dabei einem Rechner zugeordnet, der die visuelle Anzeige auf dem Display generiert und die Benutzereingaben des Benutzers verarbeitet.

Die Figuren 1 bis 5 enthalten die Bezeichnungen F0 bis F16, welche Platzhalter für Texte darstellen, die in der tatsächlichen visuellen Anzeige auf dem Display DI wiedergegeben sind. Mit anderen Worten stehen in der tatsächlichen visuellen Anzeige an Stellen, an denen sich die einzelnen Platzhalter F0 bis F16 auf dem Display befinden, statt dieser Platzhalter entsprechende Texte. Dabei existiert folgende Zuordnung zwischen den Platzhaltern und dem entsprechenden Text der tatsächlichen visuellen Anzeige.
- Der Platzhalter F1 entspricht dem Text "Seitenleiste".
- Der Platzhalter F2 entspricht dem Text "Templates".
- Der Platzhalter F3 entspricht dem Text "Backbone".
- Der Platzhalter F4 entspricht dem Text "PRP".
- Der Platzhalter F5 entspricht dem Text "HSR".
- Der Platzhalter F6 entspricht dem Text "RSTP".
- Der Platzhalter F7 entspricht dem Text "Aggregation".
- Der Platzhalter F8 entspricht dem Text "Bay".
- Der Platzhalter F9 entspricht dem Text "PRP Backbone".
- Der Platzhalter F10 entspricht dem Text "HMI" (= Mensch-Maschine-Schnittstelle).
- Der Platzhalter F11 entspricht dem Text "Station PRP LAN A".
- Der Platzhalter F12 entspricht dem Text "Station PRP LAN B".
- Der Platzhalter F13 entspricht dem Text "Bay 1 (PRP)".
- Der Platzhalter F14 entspricht dem Text "Bay 2 (HSR)".
- Der Platzhalter F15 entspricht dem Text "IED" (= Intelligent Electronic Device).
- Der Platzhalter F16 entspricht dem Text "MU" (Merging Unit).

Auch den in Figuren 1 bis 5 dargestellten Platzhaltern F0 sind entsprechende Texte zugeordnet. Die Elemente der visuellen Anzeige, welche die Platzhalter F0 aufweisen, sind für die nachfolgende Beschreibung der Ausführungsform der Erfindung nicht relevant. Deshalb wird die Zuordnung dieser Platzhalter zu entsprechenden Texten im Folgenden nicht spezifiziert.

Darüber hinaus ist zu beachten, dass die Bezugszeichen, die zusätzlich zu den Platzhaltern F0 bis F16 in den jeweiligen Figuren 1 bis 5 enthalten sind, nicht tatsächlich Bestandteil der visuellen Anzeige auf dem Display DI sind. Die Bezugszeichen dienen lediglich zur Vereinfachung der nachfolgenden Beschreibung.

Dem Benutzer wird in allen visuellen Anzeigen der Figuren 1 bis 5 immer eine Seitenleiste SB am linken Rand des Displays DI angezeigt. Über die Seitenleiste SB werden dem Benutzer Templates in der Form von vordefinierten Netzwerkabschnitten angeboten, wobei der Benutzer ein entsprechendes Template über die Festlegung eines Netzwerktyps und einer Netzwerkfunktion auswählt, wie im Folgenden näher erläutert wird.

Die Seitenleiste SB enthält eine Vielzahl von horizontal verlaufenden Balken mit den entsprechenden Texten F0 bis F8. Der Benutzer kann über geeignete Benutzereingaben Balken in der Seitenleiste SB auswählen. Die Balken NT1, NT2 und NT3 sind dabei Netzwerktypen im Sinne von Netzwerkkategorien bzw. Netzwerkausprägungen. Der Netzwerktyp NT1 ist ein sog. Backbone-Netz, das eine Ausführungsform eines zentralen Netzwerks im Sinne der Ansprüche ist. Der Netzwerktyp NT2 ist ein Aggregationsnetzwerk, das zur Zwischenschaltung zwischen einem Backbone-Netz und mehreren dezentralen Netzwerken vorgesehen ist. Der Netzwerktyp NT3 ist ein Bay-Netz, welches eine Ausführungsform eines dezentralen Netzwerks im Sinne der Patentansprüche ist.

Neben den Netzwerktypen NT1 bis NT3 enthält die Seitenleiste SB ferner Balken, welche Netzwerkfunktionen NF1, NF2 und NF3 darstellen. Die Netzwerkfunktionen korrelieren dabei mit entsprechenden Netzwerkprotokollen. Die Netzwerkfunktion NF1 ist dem bereits oben erwähnten Redundanzprotokoll PRP zugeordnet. Die Netzwerkfunktion NF2 in dem bereits oben erwähnten Redundanzprotokoll HSR zugeordnet. Die Netzwerkfunktion NF3 in dem bereits oben erwähnten Redundanzprotokoll RSTP zugeordnet.

In den Figuren 1 bis 5 bezeichnen die Bezugszeichen 7 und 701 Kommunikationsverbindungen, die das PRP-Protokoll verwenden und zu einem ersten LAN-Netzwerk (LAN A) gehören. Diese Kommunikationsverbindungen sind in der tatsächlichen visuellen Darstellung, die im Gegensatz zu den Figuren 1 bis 5 farbig ist, rot dargestellt. Sie können jedoch in der tatsächlichen visuellen Darstellung auch beliebig anders wiedergegeben werden. Demgegenüber bezeichnen die Bezugszeichen 6 und 601 Kommunikationsverbindungen, die zwar auch das PRP-Protokoll verwenden, jedoch zu einem zweiten LAN-Netzwerk (LAN B) gehören. Diese Kommunikationsverbindungen sind in der tatsächlichen visuellen Anzeige blau wiedergegeben. Sie können jedoch in der tatsächlichen visuellen Darstellung auch beliebig anders wiedergegeben werden. Darüber hinaus gibt es in den Figuren Kommunikationsverbindungen in der Form von Ringverbindungen 8, die auf dem HSR-Protokoll basieren, sowie weitere Kommunikationsverbindungen 9, die weder PRP noch HSR verwenden. Diese Kommunikationsverbindungen 8 und 9 sind in der tatsächlichen visuellen Anzeige grün dargestellt. Sie können jedoch in der tatsächlichen visuellen Darstellung auch beliebig anders wiedergegeben werden. Die Kommunikationsverbindungen 6 und 601 unterscheiden sich dahingehend, dass die Kommunikationsverbindungen 6 interne Kommunikationsverbindungen innerhalb eines Netzwerkabschnitts sind, wohingegen die Kommunikationsverbindungen 601 externe Kommunikationsverbindungen zwischen Netzwerkabschnitten darstellen. Analog sind die Kommunikationsverbindungen 7 interne Kommunikationsverbindungen innerhalb eines Netzwerksabschnitts, wohingegen die Kommunikationsverbindungen 701 externe Kommunikationsverbindungen zwischen Netzwerkabschnitten darstellen. Die Kommunikationsverbindungen 8 und 9 sind jeweils interne Kommunikationsverbindungen innerhalb eines Netzwerkabschnitts.

Gemäß Fig. 1 hat der Benutzer für eine zu erstellende Netzwerktopologie zunächst über die Benutzerschnittstelle UI einen Netzwerkabschnitt vom Netzwerktyp NT1 (Backbone) ausgewählt. Diese Auswahl kann beispielsweise dadurch erfolgen, dass der Benutzer einen entsprechenden Cursor in der visuellen Anzeige der Fig. 1 mittels einer Computermaus auf dem Balken mit der Bezeichnung F3 (Backbone) positioniert und dann einen Mausklick an der Computermaus durchführt. Als Folge werden dem Benutzer für diesen Netzwerktyp die drei Netzwerkfunktionen NF1, NF2 und NF3, d.h. die entsprechenden Redundanzprotokolle PRP, HSR und RSTP, angezeigt werden. Der Benutzer wählt schließlich die Netzwerkfunktion NF1 (d.h. das Protokoll PRP) aus, was in Fig. 1 durch die Umrandung B1 visuell verdeutlicht wird. Diese Auswahl kann wiederum dadurch erfolgen, dass der Benutzer einen entsprechenden Cursor in der visuellen Anzeige der Fig. 1 mittels einer Computermaus auf dem Balken mit der Bezeichnung F4 (PRP) positioniert und dann einen Mausklick an der Computermaus durchführt. Alternativ kann die Auswahl auch über Drag & Drop erfolgen. Als Konsequenz wird im rechten Teil der visuellen Anzeige der Netzwerkabschnitt NA1 wiedergegeben, der ein vordefiniertes Backbone-Netz darstellt, das die Geräte 1, 2 und 3 enthält.

In Fig. 1 und auch in den weiteren Figuren sind die Geräte 1 Gerätetypen in der Form von Switches mit Zeitgeber, wohingegen die Geräte 2 Gerätetypen in der Form von Redundancy Boxes gemäß dem Standard IEC 61850 sind und die Geräte 3 Gerätetypen in der Form von Switches ohne Zeitgeber sind. Eine Redundancy Box ist eine spezielle Art von Switch (vorzugsweise ein Kompakt-Switch), um sog. Single Attached Nodes an ein PRP-Netzwerk anzubinden.

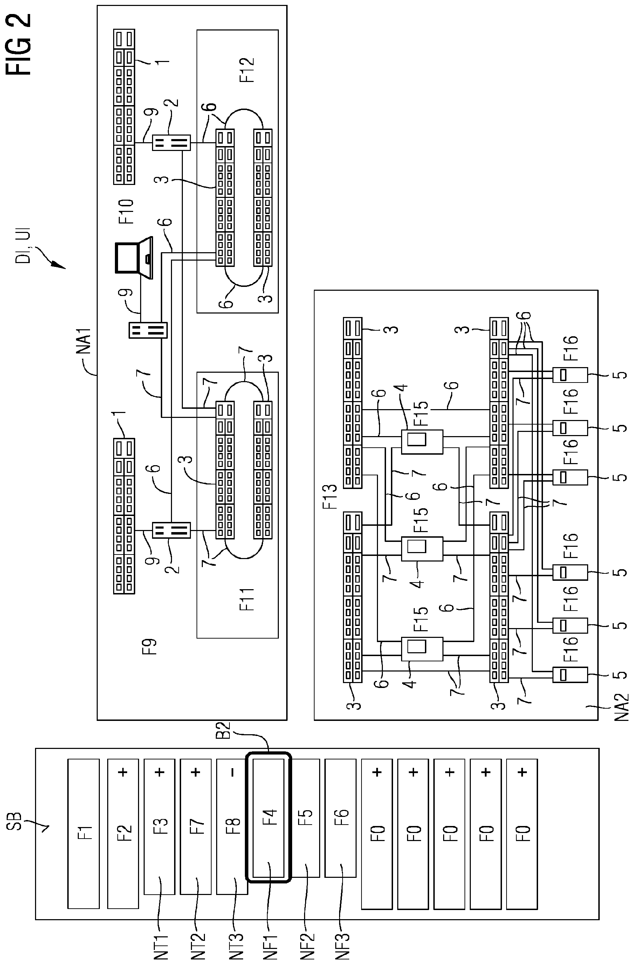

Gemäß Fig. 2 wählt der Benutzer in einem nächsten Schritt als weiteren Bestandteil der Netzwerktopologie ein Bay-Netz aus, welches wiederum das Redundanzprotokoll PRP verwendet. Dies wird durch die Umrandung B2 in Fig. 2 angedeutet. Als Konsequenz wird als weiterer Netzwerkabschnitt NA2 ein vordefiniertes Bay-Netz im rechten Teil der visuellen Anzeige wiedergegeben. Dieses Bay-Netz enthält vier Switches 3 ohne Zeitgeber sowie drei Geräte 4 in der Form von Protection IEDs 4 (Intelligent Electronic Devices) sowie sechs Geräte 5 in der Form von MUs (Merging Units). Hier und im Folgenden bezeichnet das Bezugszeichen 4 immer den Gerätetyp eines Protection IED und das Bezugszeichen 5 immer den Gerätetyp einer MU.

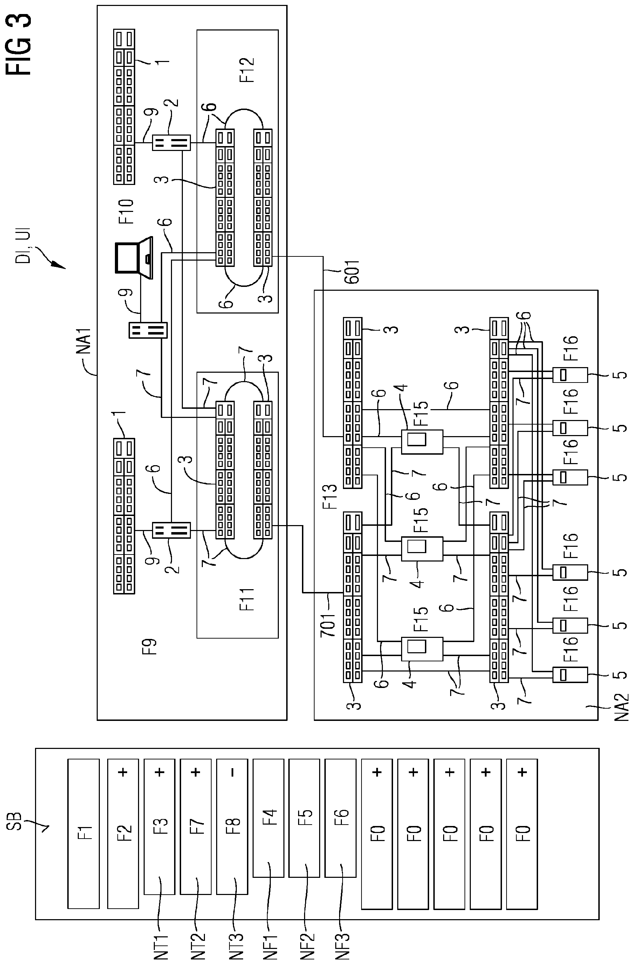

Die in Fig. 2 dargestellten Netzwerkabschnitte NA1 und NA2 sind noch nicht über externe Kommunikationsverbindungen miteinander verknüpft. Diese externen Kommunikationsverbindungen werden in einem nächsten Schritt durch den Benutzer über die Benutzerschnittstelle Ul ausgewählt, indem der Benutzer beispielsweise Linien zwischen Netzwerkabschnitten einzeichnet. Als Konsequenz wird die visuelle Anzeige der Fig. 3 erzeugt. Wie man erkennt, wurden an Kommunikationspunkten entsprechender Switches 3 über eine geeignete Benutzereingabe Kommunikationsverbindungen 701 und 601 zwischen den Netzwerkabschnitten NA1 und NA2 hinzugefügt.

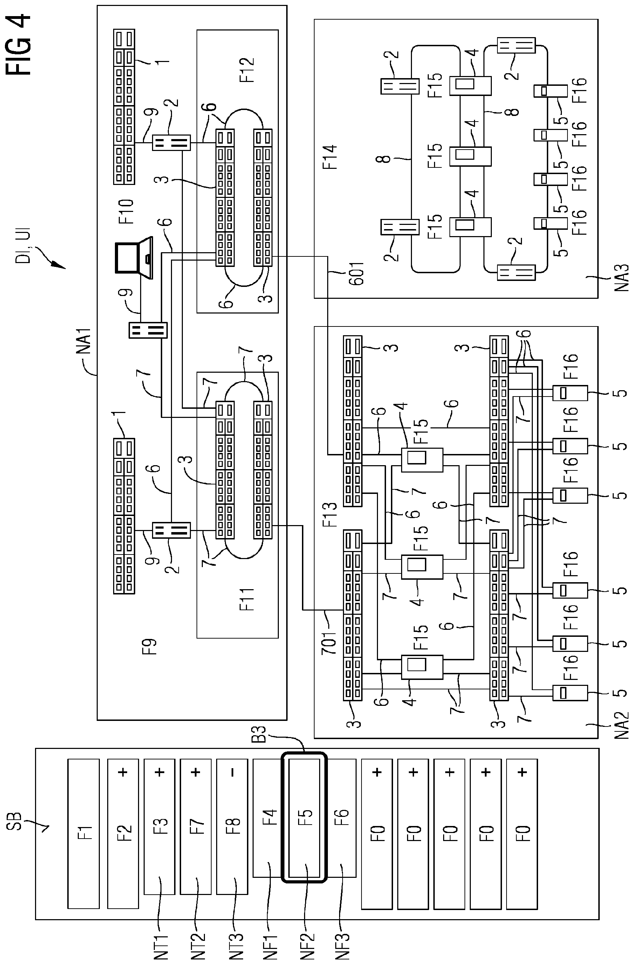

In dem in Fig. 4 dargestellten Schritt wählt der Benutzer als letzten Netzwerkabschnitt für die zu erstellende Netzwerktopologie ein weiteres vordefiniertes Bay-Netz basierend auf dem Redundanzprotokoll HSR aus, wie durch die Umrandung B3 angedeutet ist. Anschließend wird der Netzwerkabschnitt NA3 im rechten Teil der visuellen Anzeige des Displays DI wiedergegeben. Dieser Netzwerkabschnitt enthält die beiden ringförmigen Kommunikationsverbindungen 8 sowie vier Redundancy Boxes 2, drei Protection IEDs 4 sowie fünf MUs 5. Dabei existieren noch keine externen Kommunikationsverbindungen von dem Netzwerkabschnitt NA3 zu den anderen Netzwerkabschnitten NA1 und NA2.

Entsprechende externe Kommunikationsverbindungen wählt der Benutzer anschließend über geeignete Benutzereingaben aus, indem er beispielsweise Linien zwischen Netzwerkabschnitten einzeichnet. Anschließend wird die Anzeige gemäß Fig. 5 wiedergegeben. Wie man erkennt, existieren nunmehr zusätzliche externe Kommunikationsverbindungen 601 bzw. 701 zwischen dem Netzwerkabschnitt NA3 und den Netzwerkabschnitten NA1, NA2. Der Benutzer hat somit durch die Auswahl geeigneter Templates über die Seitenleiste SB eine Netzwerktopologie basierend auf vordefinierten Netzwerkabschnitten festgelegt und darüber hinaus auch die externen Kommunikationsverbindungen zwischen den Netzwerkabschnitten definiert.

In einer bevorzugten Variante ist die Benutzerschnittstelle UI ferner derart ausgestaltet, dass der Benutzer die auf dem Display DI graphisch wiedergegebenen Netzwerkabschnitte auch bearbeiten kann. Beispielsweise kann er die darin enthaltene Elemente löschen bzw. verändern bzw. neue Elemente hinzufügen. In einer weiteren bevorzugten Varianten besteht ferner die Möglichkeit, dass die einzelnen dargestellten Geräte auch konkret basierend auf Herstellertypen konfiguriert werden. Dies kann manuell durch den Benutzer oder automatisiert durch Einlesen einer Konfigurationsdatei erfolgen. In einer weiteren bevorzugten Ausführungsform werden vom Benutzer hinzugefügte externe Kommunikationsverbindungen dahingehend überprüft, ob diese technisch überhaupt zulässig sind. Ist dies nicht der Fall, werden die entsprechenden Kommunikationsverbindungen in der visuellen Anzeige wieder gelöscht. Zusätzlich wird dem Benutzer auf der visuellen Anzeige ein entsprechender Hinweis bezüglich der Löschung der Kommunikationsverbindung gegeben. Beispielsweise werden Kommunikationsverbindungen gelöscht, wenn sie aufgrund der Kompatibilität der Ports der verknüpften Geräte überhaupt nicht möglich sind.

Die im Vorangegangenen beschriebenen Ausführungsformen der Erfindung weisen eine Reihe von Vorteilen auf. Insbesondere wird eine Benutzerschnittstelle geschaffen, mit der ein Benutzer einfach und intuitiv unterstützt wird, die Topologie eines Kommunikationsnetzwerks für eine industrielle Anlage zu erstellen. Dabei kann der Benutzer vorgegebene Netzwerk-Templates basierend auf der Festlegung von Netzwerktypen und Netzwerkfunktionen auswählen, woraufhin ihm vordefinierte Netzwerkabschnitte visuell angezeigt wird. Der Benutzer hat dabei die Möglichkeit, externe Kommunikationsverbindungen zwischen den angezeigten Netzwerkabschnitten festzulegen. Optional hat er auch die Möglichkeit, die angezeigten Netzwerkabschnitte anzupassen. Insbesondere kann er Gerätetypen verändern oder löschen und gegebenenfalls neue Gerätetypen hinzufügen. Das Kommunikationsnetzwerk der industriellen Anlage kann somit über vordefinierte Netzwerk-Templates Schritt für Schritt für den benötigten Zweck ganzheitlich und übergreifend modelliert werden.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zur rechnergestützten Benutzerassistenz bei der Erstellung einer Topologie eines Kommunikationsnetzwerks (KN) für eine industrielle Anlage, wobei mittels einer Benutzerschnittstelle (UI) umfassend ein Display (DI):
a) vordefinierte Netzwerkabschnitte (NA1, NA2, NA3) in Antwort auf erste Benutzereingaben an der Benutzerschnittstelle (UI) auf dem Display (DI) graphisch wiedergegeben werden, wobei die ersten Benutzereingaben für jeden wiederzugebenden Netzwerkabschnitt (NA1, NA2, NA3) einen Netzwerktyp (NT1, NT2, NT3) aus einer Mehrzahl von Netzwerktypen (NT1, NT2, NT3) und eine Netzwerkfunktion (NF1, NF2, NF3) aus einer Mehrzahl von Netzwerkfunktionen (NF1, NF2, NF3) auswählen, wobei ein jeweiliger wiedergegebener Netzwerkabschnitt (NA1, NA2, NA3) dem ausgewählten Netzwerktyp (NT1, NT2, NT3) entspricht und die ausgewählte Netzwerkfunktion (NF1, NF2, NF3) aufweist und Geräte (1, 2, ..., 5) aus vorbestimmten Gerätetypen und interne Kommunikationsverbindungen (6, 7, 8, 9) zwischen den Geräten (1, 2, ..., 5) enthält, wobei die Geräte (1, 2, ..., 5) und die internen Kommunikationsverbindungen (6, 7, 8, 9) auf dem Display (DI) graphisch wiedergegeben werden;
b) externe Kommunikationsverbindungen (601, 701) zwischen zumindest einigen der wiedergegebenen Netzwerkabschnitte (NA1, NA2, NA3) in Antwort auf zweite Benutzereingaben an der Benutzerschnittstelle (UI) auf dem Display (DI) graphisch wiedergegeben werden, wobei die zweiten Benutzereingaben Verknüpfungen zwischen wiedergegebenen Geräten (1, 2, ..., 5) unterschiedlicher Netzwerkabschnitte (NA1, NA2, NA3) festlegen.

2. Verfahren nach Anspruch 1, **dadurch gekennzeichnet, dass** die Mehrzahl von Netzwerktypen (NT1, NT2, NT3) einen oder mehrere der folgenden Typen umfasst:
- ein zentrales Netzwerk (NT1),
- ein dezentrales Netzwerk (NT3), das zur Anbindung an ein zentrales Netzwerk (NT1) vorgesehen ist;
- ein Aggregationsnetzwerk (NT2), das zur Zwischenschaltung zwischen einem zentralen Netzwerk (NT1) und mehreren dezentralen Netzwerken (NT3) vorgesehen ist.

3. Verfahren nach Anspruch 1 oder 2, **dadurch gekennzeichnet, dass** die Mehrzahl von Netzwerkfunktionen (NF1, NF2, NF3) Netzwerkprotokolle umfasst, wobei ein Netzwerkprotokoll, das ein jeweiliger wiedergegebener Netzwerkabschnitt (NA1, NA2, NA3) als Netzwerkfunktion (NF1, NF2, NF3) aufweist, in diesem Netzwerkabschnitt (NA1, NA2, NA3) verwendet wird.

4. Verfahren nach Anspruch 3, **dadurch gekennzeichnet, dass** die Netzwerkprotokolle zumindest eines der folgenden Protokolle umfassen:
- PRP (= Parallel Redundancy Protocol);
- HSR (= High-availability Seamless Redundancy);
- RSTP (= Rapid Spanning Tree Protocol);
- NTP (= Network Time Protocol);
- PTP (= Precision Time Protocol);
- MRP (= Media Redundancy Protocol).

5. Verfahren nach einem der vorhergehenden Ansprüche, **dadurch gekennzeichnet, dass** die vorbestimmten Gerätetypen einen oder mehrere Netzwerkgerätetypen und vorzugsweise einen oder mehrere Typen von Switches und/oder Routern umfassen.

6. Verfahren nach einem der vorhergehenden Ansprüche, **dadurch gekennzeichnet, dass** die vorbestimmten Gerätetypen einen oder mehrere Endgerätetypen und vorzugsweise einen oder mehrere der folgenden Typen umfassen:
- ein Protection IED (= Intelligent Electronic Device);
- eine MU (= Merging Unit).

7. Verfahren nach einem der vorhergehenden Ansprüche, **dadurch gekennzeichnet, dass** die Benutzerschnittstelle (UI) eine Modifikation der wiedergegebenen Netzwerkabschnitte (NA1, NA2, NA3) durch den Benutzer ermöglicht.

8. Verfahren nach einem der vorhergehenden Ansprüche, **dadurch gekennzeichnet, dass** eine externe Kommunikationsverbindung (601, 701) nur dann dauerhaft auf dem Display (DI) in Antwort auf eine zweite Benutzereingabe graphisch wiedergegeben wird, wenn die Verknüpfung zwischen den wiedergegebenen Geräten (1, 2, ..., 5) entsprechend der zweiten Benutzereingabe zulässig ist.

9. Vorrichtung zur rechnergestützten Benutzerassistenz bei der Erstellung einer Topologie eines Kommunikationsnetzwerks (KN) für eine industrielle Anlage, wobei die Vorrichtung eine Benutzerschnittstelle (UI) mit einem Display (DI) umfasst und die Benutzerschnittstelle (UI) zur Durchführung eines Verfahrens konfiguriert ist, bei dem:
a) vordefinierte Netzwerkabschnitte (NA1, NA2, NA3) in Antwort auf erste Benutzereingaben an der Benutzerschnittstelle (UI) auf dem Display (DI) graphisch wiedergegeben werden, wobei die ersten Benutzereingaben für jeden wiederzugebenden Netzwerkabschnitt (NA1, NA2, NA3) einen Netzwerktyp (NT1, NT2, NT3) aus einer Mehrzahl von Netzwerktypen (NT1, NT2, NT3) und eine Netzwerkfunktion (NF1, NF2, NF3) aus einer Mehrzahl von Netzwerkfunktionen (NF1, NF2, NF3) auswählen, wobei ein jeweiliger wiedergegebener Netzwerkabschnitt (NA1, NA2, NA3) dem ausgewählten Netzwerktyp (NT1, NT2, NT3) entspricht und die ausgewählte Netzwerkfunktion (NF1, NF2, NF3) aufweist und Geräte (1, 2, ..., 5) aus vorbestimmten Gerätetypen und interne Kommunikationsverbindungen (6, 7, 8) zwischen den Geräten (1, 2, ..., 5) enthält, wobei die Geräte (1, 2, ..., 5) und die internen Kommunikationsverbindungen (6, 7, 8, 9) auf dem Display (DI) graphisch wiedergegeben werden;
b) externe Kommunikationsverbindungen (601, 701) zwischen zumindest einigen der wiedergegebenen Netzwerkabschnitte (NA1, NA2, NA3) in Antwort auf zweite Benutzereingaben an der Benutzerschnittstelle (UI) auf dem Display (DI) graphisch wiedergegeben werden, wobei die zweiten Benutzereingaben Verknüpfungen zwischen wiedergegebenen Geräten (1, 2, ..., 5) unterschiedlicher Netzwerkabschnitte (NA1, NA2, NA3) festlegen.

10. Vorrichtung nach Anspruch 9, **dadurch gekennzeichnet, dass** die Benutzerschnittstelle (UI) zur Durchführung eines Verfahrens nach einem der Ansprüche 2 bis 8 konfiguriert ist.
